Europäisches Patentamt

European Patent Office

Office européen des brevets

(19)

(11) **EP 0 478 771 B1**

(12) **FASCICULE DE BREVET EUROPEEN**

(45) Date de publication et mention
de la délivrance du brevet:
**10.07.1996   Bulletin 1996/28**

(21) Numéro de dépôt: **91909430.0**

(22) Date de dépôt: **19.04.1991**

(51) Int Cl.⁶: $C21D\ 8/06$

(86) Numéro de dépôt international:
**PCT/FR91/00328**

(87) Numéro de publication internationale:
**WO 91/16461 (31.10.1991 Gazette 1991/25)**

(54) **PROCEDE D'ELABORATION DE FILS D'ACIER DESTINES A LA FABRICATION DE CONDUITES FLEXIBLES, FILS D'ACIER OBTENUS PAR CE PROCEDE ET CONDUITES FLEXIBLES RENFORCEES PAR DE TELS FILS**

**VERFAHREN ZUM HERSTELLEN VON STAHLDRAHT FÜR BIEGSAME LEITUNGEN, NACH DIESEM VERFAHREN HERGESTELLTER DRAHT UND MIT DIESEM DRAHT VERSTÄRKTE BIEGSAME LEITUNGEN**

**METHOD FOR PRODUCING STEEL WIRES FOR THE MANUFACTURE OF FLEXIBLE DUCTS, STEEL WIRES THEREBY OBTAINED AND FLEXIBLE DUCTS REINFORCED THEREWITH**

(84) Etats contractants désignés:
**AT BE CH DE DK ES FR GB IT LI LU NL SE**

(30) Priorité:  **20.04.1990  FR 9005063**

(43) Date de publication de la demande:
**08.04.1992   Bulletin 1992/15**

(73) Titulaires:
- **COFLEXIP**
  **92100 Boulogne-Billancourt (FR)**
- **INSTITUT FRANCAIS DU PETROLE**
  **F-92502 Rueil-Malmaison (FR)**

(72) Inventeurs:
- **MALLEN HERRERO, José**
  **F-75008 Paris (FR)**
- **SUGIER, André**
  **F-92500 Rueil Malmaison (FR)**

(74) Mandataire: **Levy, David et al**
**c/o S.A. FEDIT-LORIOT & AUTRES**
**CONSEILS EN PROPRIETE INDUSTRIELLE**
**38, Avenue Hoche**
**F-75008 Paris (FR)**

(56) Documents cités:
| | |
|---|---|
| **EP-A- 0 157 045** | **WO-A-89/10420** |
| **DE-C- 750 290** | **GB-A- 2 163 513** |
| **US-A- 3 264 144** | **US-A- 3 591 427** |
| **US-A- 3 950 190** | **US-A- 4 067 754** |
| **US-A- 4 585 062** | |

- **PATENT ABSTRACTS OF JAPAN, vol. 14, no. 47 (C-682), 9 décembre 1990; & JP-A-1 279 710 (NIPPON STEEL) 10 novembre 1989**

**Description**

La présente invention concerne les fils d'acier pour la fabrication de conduites flexibles résistant à la corrosion en présence d'hydrogène sulfuré (H₂s) et vise également les conduites flexibles fabriquées au moyen de ces fils. L'invention a encore pour objet le procédé d'élaboration de ces fils d'acier pour les rendre résistants en milieu H₂S.

On sait que dans de nombreuses applications on utilise, pour le transport des fluides, des conduites flexibles à armatures métalliques et que, dans certains cas, notamment dans le domaine pétrolier, ces conduites flexibles sont soumises aux attaques de produits sulfurés.

Dans les conduites flexibles, l'étanchéité étant assurée par un ou plusieurs tubes ou gaines en matière polymère, telles que des thermoplastiques ou des élastomères, la résistance mécanique à la pression interne et aux sollicitations de manutention et de fonctionnement est assurée par des armatures métalliques réalisées en fils d'acier enroulés en spirale.

Ces fils d'acier, mis en forme généralement par tréfilage à chaud ou à froid, peuvent avoir des profils différents dans les différentes couches des armatures métalliques.

Ces fils peuvent être soit des fils sensiblement méplats ayant des dimensions d'environ 2 x 5 mm à 4 x 10 mm, ou des fils de forme à profil agrafable, par exemple en Z, ou T ou en U, permettant l'accrochage d'un fil avec le fil de la spire voisine, à l'enroulement, ou encore des fils de section circulaire éventuellement assemblés sous forme de torons (câblés).

Dans le cas de réalisation de conduites flexibles destinées à travailler en présence de H₂S, la qualité des aciers servant à la fabrication des fils d'armature, ainsi que les traitements mécaniques et thermiques effectués sur ces fils (notamment écrouissage à la mise en forme, puis éventuellement recuit) doivent être choisis de façon telle que ces fils apportent la résistance mécanique nécessaire en service, en même temps qu'ils résistent à la corrosion en présence de H₂S.

Depuis plusieurs années que se sont posés les problèmes de résistance des structures en acier en milieu H₂S, on a effectué de très nombreuses recherches et expérimentations, aussi bien en laboratoire qu'en essais réels, pour déterminer quelles caractéristiques devaient avoir les aciers pour être aptes à l'utilisation en milieu H₂S.

Ces recherches ont permis d'établir qu'il existait une corrélation entre la résistance à la corrosion en présence de H₂S et la dureté du métal. Plus précisément on a déterminé que des aciers au carbone et des aciers faiblement alliés, ayant une dureté plus petite ou égale à 22 HRc, présentaient, sous contrainte, une résistance satisfaisante à la corrosion H₂S et étaient donc admis comme compatibles avec H₂S.

Dans les conclusions de ces recherches, on a choisi de caractériser le métal par sa dureté HRc, ce qui permet des mesures simples non destructives. Mais, comme il est connu, il existe une équivalence, donnée par des tables, entre la dureté (HRc) et la résistance à la rupture (Rm).

C'est ainsi qu'une dureté de 22 HRc correspond à une résistance à la rupture Rm d'environ 775-800 MPa.

Pour tenir compte de cette corrélation "compatilité H₂S/dureté", les fabricants choisissent donc généralement des aciers au carbone doux ou mi-dur (0,15 % à 0,30 % de C) ou des aciers faiblement alliés, auxquels ils font subir, après l'écrouissage résultant de la mise en forme (par tréfilage ou laminage), un recuit approprié pour amener la dureté à la valeur admise si nécessaire.

Une règle admise (Standard NACE/0175 National Association of Corrosion Engineers) a d'ailleurs concrétisé les résultats des recherches rappelées ci-dessus en fixant que des aciers au carbone, utilisés dans le domaine pétrolier, seraient considérés comme compatibles avec H₂S, sans autre essai, s'ils présentaient une dureté <22 HRc, les teneurs en carbone étant prévues inférieures ou égales à 0,38 % .

Cette règle conduit donc, pour les fils d'acier formant les armatures des conduites flexibles, à des qualités mécaniques relativement faibles, correspondant seulement à Rm = 775 à 800 MPa au maximum, comme on l'a vu ci-dessus. De plus, la limite d'élasticité (Re) est relativement faible.

Il en résulte que les fabricants de conduites flexibles, pour respecter ces exigences choisissent, le plus souvent, une qualité d'acier à faible teneur en carbone (par exemple 0,15 à 0,30 %) et doivent adopter des sections de fils, donc des poids, des encombrements et des prix, supérieurs à ce qui serait nécessaire dans des conditions d'exploitation moins agressives autorisant l'utilisation d'aciers à plus grande résistance.

On pourrait proposer, pour remédier à ces inconvénients, d'utiliser des fils d'acier à plus forte teneur en carbone, présentant, après écrouissage et recuit, de meilleures qualités mécaniques, telles qu'une dureté supérieure à 22 HRc (par exemple de l'ordre de 25 à 30 HRc), plus élevée que la dureté admise par la règle NACE-0175 et correspondant à une résistance à la rupture supérieure à 800 MPa. Dans ce cas, ces fils dépassant la dureté 22 HRc devraient être protégés pour résister à la corrosion en milieu H₂S, par exemple par un dépôt métallique superficiel en métal résistant à H₂S. Un tel procédé, à base de revêtement d'aluminium, est défini dans la demande de brevet britannique 84 31781 du 17.12.1984 (publication 2 163 513). Mais avec une telle solution, le gain qui pourrait être réalisé sur la section des fils serait perdu, et au-delà, par le surcoût résultant du dépôt métallique protecteur supplémentaire.

Il est également possible, pour remédier aux inconvénients des aciers à faible teneur en carbone, à caractéristiques mécaniques trop faibles d'utiliser d'autres qualités d'acier, telles que des aciers austénitiques inoxydables ou des alliages ayant des duretés supérieures à 22HRc correspondant à des limites de rupture plus élevées. Mais dans ce cas encore, le gain qui pourrait être réalisé sur la section de fils serait perdu à cause du coût plus élevé de ces métaux.

La norme NACE a d'ailleurs prévu le cas de tels aciers ne répondant pas à l'exigence de base d'une dureté < 22 HRc. Dans ce cas, ces aciers doivent subir un essai sur échantillon représentatif, sous contrainte, en milieu $H_2S$ (Nace Test Method TM 01-77 relatif aux effets de fissuration sous contrainte, désignés communément par "sulfide stress corrosion cracking ou SSCC") pour être considérés comme utilisables dans la fabrication des structures métalliques devant résister aux effets de corrosion sous contrainte en présence de $H_2S$.

Une autre norme NACE TM 028487 est relative aux effets de fissuration induits par l'hydrogène, désignés communément par "hydrogen-induced cracking ou HIC". La procédure de test, recommandée dans la norme ci-dessus, vise principalement des tubes en acier et définit des échantillons dont la section est usuellement relativement épaisse, et consiste à les exposer sans tension, dans une solution d'eau de mer saturée par de l'$H_2S$, à température et pression ambiantes, à un pH compris entre 4,8 et 5,4.

La présente invention a pour but de réaliser des fils en acier hypoeutectoïdes au carbone-manganèse, pour armature de conduites flexibles qui sont compatibles avec le milieu $H_2S$ et qui présentent de meilleures qualités mécaniques que ceux utilisés jusqu'à présent, et cela à partir d'aciers au carbone de qualité courante, c'est-à-dire sans nécessiter de faire appel à des alliages coûteux et/ou de prévoir une protection par dépôt métallique superficiel.

La demanderesse, après de longues et minitieuses recherches, a trouvé, de façon surprenante, que les aciers à moyenne ou forte teneur en carbone pouvaient être utilisés pour la fabrication de fils à résistance mécanique élevée tout en résistant à la corrosion en milieu $H_2S$ et répondant aux exigences des normes NACE, à condition de leur faire subir certaines opérations pour leur conférer les caractéristiques appropriées.

Au cours de ces recherches, la demanderesse a abouti à la conclusion qu'il existe une corrélation entre la compatibilité $H_2S$ et un traitement thermique de restauration qui, lui-même, après écrouissage, est spécifique en fonction du taux d'écrouissage et de la teneur en carbone de l'acier utilisé, comme cela sera expliqué en détail ultérieurement.

Le procédé d'élaboration de fils d'acier selon l'invention est défini à la revendication 1, les revendications 2 à 20 concernant des modes de réalisation préférés du procédé.

Les revendications 21 à 23 se rapportent aux fils d'acier de l'invention et à un flexible incorporant ces fils.

Dans tous les cas, il est nécessaire que l'acier traité conformément à la présente invention présente une résistance mécanique à la rupture ($R_m$) supérieure à 850 MPa et une structure ayant peu de ferrite libre.

Dans la description qui suit, on désigne par :

- ferrite libre, la ferrite qui se trouve, d'une part, aux joints des grains et, d'autre part, entre les zones perlitiques à l'intérieur des grains;
- perlite, l'aggrégat constitué par des lamelles alternées de cémentite et de ferrite, cette ferrite n'étant pas considérée comme libre, au sens de l'invention.
- cémentite, le carbure de fer ($Fe_3C$).

En effet, la demanderesse a trouvé que dans le cas des aciers au carbone présentant une dureté supérieure à 22 HRc, la teneur en ferrite libre influe de façon importante sur la compatibilité $H_2S$ de ces fils d'acier.

Les études menées dans ce sens ont montré que le taux de ferrite libre doit être inférieur à 15 % et, de préférence inférieur à 12 % .

Lorsque la teneur en carbone est inférieure à 0,55 %, on effectue, préalablement à l'étape d'écrouissage, une opération dite de patentage qui est un traitement thermique connu en soi. Le patentage est effectué, par exemple par passage continu dans un four de manière à porter le fil à une température dans le domaine austénitique, puis passage dans un bain isotherme, dont la température est comprise entre 400 et 550°c, par exemple un bain de plomb fondu, puis refroidissement à la température ambiante. Le patentage permet d'homogénéiser le fil d'acier et de conférer à l'acier une structure avec homogénéisation de la répartition et de la morphologie de la perlite dans la matrice de ferrite, apte à faciliter une transformation à froid. Le taux moyen d'écrouissage est compris entre 10 et 90 %.

La demanderesse a trouvé de façon surprenante, que pour les aciers à teneur en carbone inférieure à 0,55 %, le patentage devait être effectué à haute température, entre 950 et 1 150°C et, de préférence, supérieure à 1000°C. Un tel patentaae pour ce type d'acier produit outre un acier à gros grains, une structure ayant un taux de ferrite libre inférieur à 15 % . De préférence, la taille des grains du fil patenté doit être inférieure à l'indice 7 et, de préférence inférieure à 6, de la norme AFNOR NF 1-04102.

Pour les aciers à teneur en carbone supérieure à 0,55 %, on peut, selon l'invention, procéder ou non à un patentage. Dans l'hypothèse où on opterait pour un patentage, pour l'obtention d'un fil homogène plus facile à transformer à froid, alors il est préférable que le traitement thermique en continu soit effectué à une température supérieure à la température d'austénitisation $AC_3$ de l'acier utilisé ; le taux moyen d'écrouissage est compris entre 5 et 80 %.

La température de patentage est selon l'invention, la température atteinte par le fil dans le four.

Dans le cas d'un écrouissage à froid, précédé ou non d'un patentage selon la teneur en carbone de l'acier utilisé, on soumet le fil obtenu à un traitement thermique dit de restauration dont les conditions de température et de durée sont telles que la limite d'élasticité du fil après le traitement de restauration soit inférieure à celle qu'il avait à l'état écroui. Alors, on a découvert que l'acier a une bonne compatibilité $H_2S$.

Dans l'hypothèse d'une mise en forme à une certaine température, entre 450 et 700°C par exemple, et en tout cas inférieure à la température $AC_1$, ladite mise en forme pouvant induire éventuellement un effet d'écrouissage, par un ajustement judicieux du taux d'écrouissage, de la température et de la teneur en C de l'acier utilisé, on obtient, à l'état final, un fil dont la limite d'élasticité est inférieure à celle du même fil écroui à froid avec le même taux d'écrouissage. La demanderesse a trouvé que lorsque la teneur du ferrite est inférieure à 15 %, le fil ainsi obtenu est compatible $H_2S$.

Les fils réalisés suivant le nouveau procédé franchissent avec succès l'essai NACE 01-77, dont il a été question ci-dessus. Les fils ainsi réalisés peuvent avoir des résistances à la rupture comprises entre 850 et 1200 MPa, soit jusqu'à plus de 50 % supérieure à celles des fils d'acier au carbone utilisables jusqu'à présent.

De même, les fils selon l'invention satisfont à la norme NACE TM-0284-87 (HIC).

Il est ainsi possible, soit de réduire la section des fils sensiblement dans la même proportion, soit d'augmenter, sensiblement dans la même proportion, la pression de service des conduites (à section égale des fils d'armature).

Suivant l'invention on peut maintenant utiliser un acier renfermant une teneur en carbone supérieure à 0,38 % et/ou dont la dureté est supérieure à 22 HRc.

Le traitement de restauration est un procédé déjà proposé pour d'autres applications avec des nuances d'acier spécifique, qui peut être réalisé, soit en discontinu, par lots ou par bobines (dit "traitement par batch"), soit en continu, par défilement dans un four thermique ou à induction.

De bons résultats ont été obtenus dans le cas de "traitement par batch" avec des durées variables, et en particulier de l'ordre de 3 à 6 heures après montée en température et à une température comprise entre 400 et 600°C. Bien évidemment et selon l'invention, on peut faire varier la durée du traitement en fonction de la température et réciproquement, de façon à obtenir des propriétés mécaniques données, la durée du traitement pouvant être comprise entre plusieurs heures et plusieurs dizaines d'heures. Cela dépend essentiellement de la tranformation de la structure de l'acier, telle qu'elle peut apparaître à l'examen microscopique, sous fort grossissement. En tout état de cause, la structure perlite-ferrite de l'acier est maintenue jusqu'au terme du traitement, la globulisation qui pourrait apparaître reste à un très faible niveau, ce qui permet d'obtenir des caractéristiques mécaniques élevées.

Dans le cas d'un traitement thermique par défilement dans un four les valeurs de l'intensité du chauffage, la vitesse de défilement et la longueur du four sont choisies de telle sorte que, d'une part, la résistance à la rupture soit abaissée d'au moins 5 %, de préférence supérieure à 10 %, et d'autre part, que la température du fil dans le four soit inférieure à la température correspondant au début de la température d'austénitisation (point $AC_1$).

Un document antérieur (brevet US 3.950.190 au nom de Lake) décrit un traitement thermique, pour des aciers au carbone écrouis à froid, désigné sous le terme de "recuit-restauration" ("recovery annealing"), qui consiste à limiter la température et la durée du traitement pour obtenir un produit ayant une résistance à la rupture comprise entre 379-551 MPa et ayant une ductibilité accrue. Suivant ce procédé, la température et la durée du traitement sont choisies de façon que l'acier conserve, après traitement thermique, 80 à 95 % de sa résistance à la rupture après écrouissage à froid et ne présente sensiblement aucune recristallisation. Il s'agit donc là également d'une restauration peu avancée du métal, mais ce brevet concerne un domaine et une qualité d'aciers entièrement différents de ceux de la présente invention. En effet, les aciers auxquels s'applique ce traitement de restauration ("recovery annealing") sont des aciers extra-doux ou doux (0,02 à 0,15 % C) avec des résistances après traitement (379-551 MPa) bien intérieures à celles (770 à 800 MPa correspondant à HRc = 22) qu'on peut déjà obtenir de façon classique pour les fils d'acier compatibles avec $H_2S$ et celles (850 à 1200 MPa) qu'on peut obtenir maintenant suivant la présente invention.

Enfin, le but recherché dans ce document antérieur est d'améliorer la ductibilité pour des tôles minces d'emboutissage, notamment pour l'industrie automobile, sans envisager en rien l'amélioration d'une quelconque résistance à la corrosion.

D'autres documents antérieurs (US 3.264.144 - US 3.591.427 - US 4.067.754) prévoient également après écrouissage, des traitements thermiques de restauration limitée, sous des températures et/ou pendant des durées suffisamment faibles pour éviter sensiblement ou limiter la recristallisation. Mais, comme dans le cas du brevet US 3.950.190 cité précédemment, ces traitements s'appliquent uniquement à des aciers ayant une teneur en carbone < 0,15 %, notamment des tôles minces, pour en améliorer la ductilité.

Dans le brevet US 4.585.062, il est décrit un traitement de restauration pour des tiges rigides de relative faible longueur et réalisées avec des aciers à faible teneur en carbone et en teneurs en manganèse et silicium élevées.

Dans les documents EP 0 375 784-$A_1$ et JP 1-279 710, il est proposé d'utiliser des aciers au carbone dont la teneur est comprise entre 0,4 et 0,8, le fil machine, de structure perlite-ferrite, étant écroui à froid puis traité thermiquement de telle façon à obtenir un fil d'acier traité de résistance mécanique à la rupture (Rm) ne dépassant pas 80 kg/mm$^2$ ou 800 MPa et dont la structure est sphéroidale ou globulisée, dans laquelle la perlite a disparu et où il ne subsiste plus que de la cémentite à l'état globulisé.

Du fait de la structure sphéroidale ou globulisée, les fils d'acier obtenus selon les procédés décrits dans ces documents ne peuvent que présenter des résistances mécaniques limitées. De plus, selon ces documents, les fils ne doivent pas présenter une dureté supérieure à 22 HRc, faute de quoi ils ne seraient pas compatibles avec $H_2S$ car des fissures apparaîtraient en raison de la corrosion sous contrainte (SSCC).

L'invention sera mieux comprise à l'aide de la description qui suit et des dessins annexés. Sur ces dessins :

- la figure 1 est une vue en perspective avec arrachement, d'une conduite flexible suivant l'invention;
la figure 2 montre, en coupe, trois profils de fils d'acier utilisés comme armature dans les conduites flexibles;
la figure 3 est une courbe de correspondance approximative entre la dureté Rockwell (HRc) et la résistance à la rupture (Rm) pour l'acier;
Les figures 4a à 4c sont des images relatives à un fil machine rond patenté suivant la présente invention;
les figures 5a à 5c sont des images relatives au fil machine rond des figures 4 ayant subi un patentage insuffisant;
les figures 6a à 6c sont des images relatives au fil machine rond des figures 4 correctement patenté et après mise en forme;
les figures 7a à 7c sont des images relatives d'un autre fil machine rond insuffisamment patenté et après mise en forme;
la figure 8 représente la teneur en ferrite libre de divers échantillons de fil machine;
la figure 9 représente la teneur en ferrite libre de divers échantillons de fil machine mal patentés;
les figures 10 et 11 représentent des teneurs en ferrite libre de fils d'acier divers, après mise en forme;
la figure 12 illustre des courbes représentatives de l'influence d'un traitement de restauration sur les caractéristiques mécaniques.

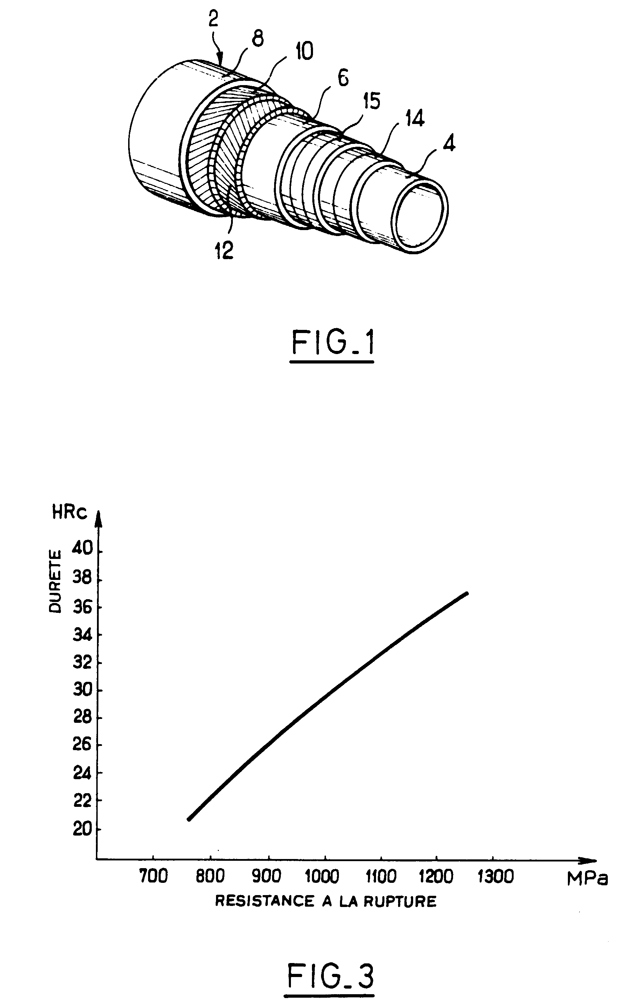

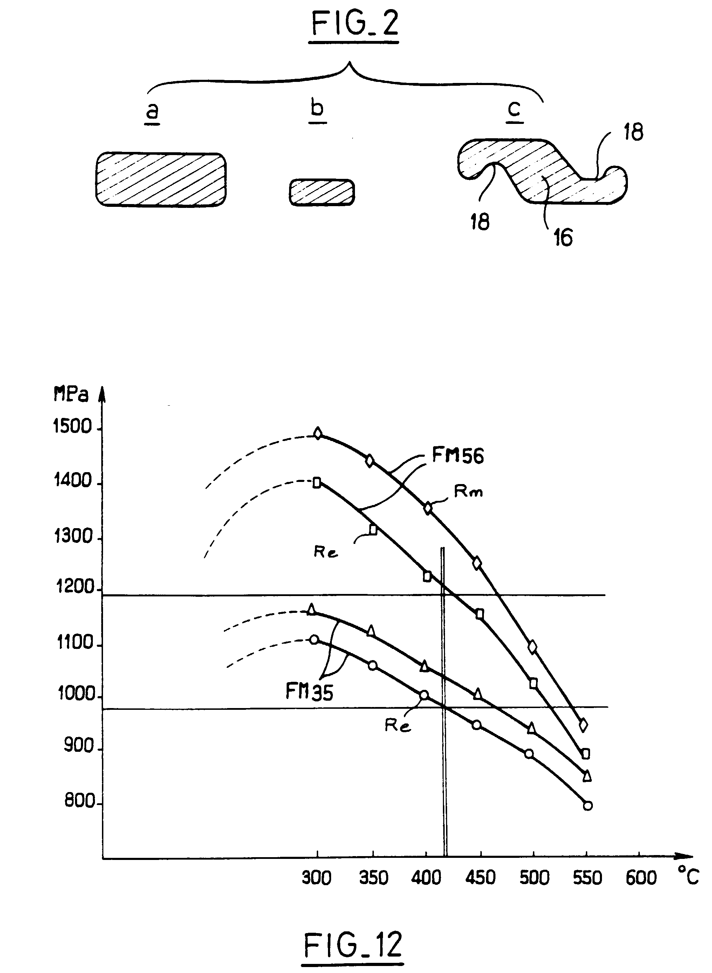

On a représenté sur la figure 1 un exemple de conduite flexible 2 qui comprend trois tubes ou gaines (intérieure 4, intermédiaire 6, extérieure 8) en matière thermoplastique, notamment en polyamide 11 commercialisé sous le nom de RILSAN, la gaine intérieure 4 assurant la fonction d'étanchéité. La résistance mécanique est assurée par des armatures en fils d'acier enroulé en spirales, qui peuvent avoir des profils différents comme illustré par la figure 2.

Les armatures 10, 12 et 15, peuvent être réalisées en fil méplat, à profil rectangulaire à coins arrondis, tel que représenté dans la figure 2a (fil de frette repère 15) ou figure 2b (fil d'armure repères 10, 12). Ces fils peuvent avoir des sections de l'ordre de 10 x 4 mm (fil de frette) et 5 x 2 mm (fil d'armure), de section circulaire ou de toute autre forme appropriée dont les dimensions de la section peuvent varier de 1 à 40 mm.

Une autre armature métallique 14 peut être constituée par du fil de forme ayant un profil permettant l'agrafage lors de l'enroulement autour du tube ou gaine 4. Une forme connue de profil de ce fil, du genre fil en forme de Z, est représentée sur la figure 2c.

Les fils de frette et d'armure, du fait de leur profil simple (figures 2a, 2b) subissent une déformation homogène, par écrouissage, lors des opérations de mise en forme. Mais il faut noter que les fils en forme de Z (figure 2c) subissent, lors de ces opérations de mise en forme, des taux d'écrouissage différents dans les diverses zones de la section par rapport au taux moyen d'écrouissage de la section totale. C'est ainsi que la zone centrale 16 subit une faible déformation (par exemple taux d'écrouissage de l'ordre de 35 à 45 %) alors que les zones latérales 18 peuvent subir une plus forte déformation (par exemple taux d'écrouissage de l'ordre de 60 à 80 %).

Selon la présente invention, le fil initial en acier au carbone a une teneur en carbone comprise entre 0,25 et 0,8 % et le taux d'écrouissage moyen est compris entre 5 et 80 % . Par fil initial, on entend de préférence un fil laminé à chaud tel qu'un fil dit machine à section circulaire ou un fil du type fer marchand à profil quelconque.

Pour les aciers à teneur en c inférieure à 0,55 % environ, on procède à un patentage. L'opération de patentage est réalisée par exemple par passage d'un fil machine dans un four qui est réglé de façon que la température du fil soit portée à une valeur supérieure ou égale à 1000°C et de préférence de l'ordre de 1050°C à 1100°C.

A la sortie du four, le fil passe dans un bain isotherme, par exemple du plomb fondu, dont la température est comprise entre 450 et 550°C. L'opération se poursuit par un refroidissement à la température ambiante. Le fil machine patenté, selon l'invention, présente une structure à gros grains et une faible quantité de ferrite libre.

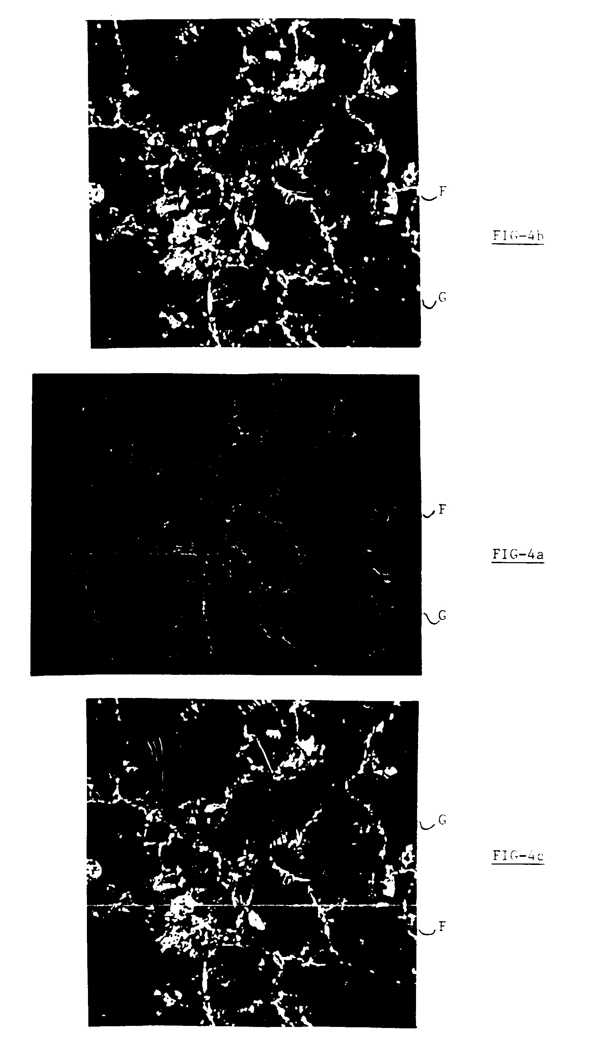

L'influence du patentage sur la teneur en ferrite libre est mise en évidence sur les figures 4 à 7 pour des fils machine et des fils formés ayant une teneur en C comprise entre 0,35 % et 0,45 % . On a déterminé la teneur en ferrite libre par traitement d'image à partir d'un examen en microscope optique.

Les fils échantillons sont enrobés puis, après polissage, attaqués pour révéler la structure comme pour un examen métallographique usuel. Un cliché est ensuite pris à un agrandissement de 200 à 1000 à l'aide d'un microscope optique du type MICROTEK MFS. L'image optique obtenue est ensuite binairisée.

On peut ainsi déterminer la teneur ou taux de ferrite libre, taux exprimé en pourcentage de surface donc en taux volumique dans l'acier. On a ainsi réalisé, pour diverses fabrications, un certain nombre d'analyses opti- ques d'échantillon, de façon à déterminer, pour chaque fabrication étudiée, un taux moyen de ferrite libre.

De manière à éviter un risque d'erreur sur le taux de ferrite, on a effectué des déterminations de la surface de ferrite sur deux images binaires encadrant par excès et par défaut les teneurs de gris relevées sur le cliché photographique.

La figure 4a représente le cliché photographique d'un fil machine du type FM35 rond. Dans le cas de l'échantillon analysé (teneur en C de 0,35 %), le fil machine a été soumis à un patentage à une température élevée, supérieure à 1000°C. La ferrite libre apparaît en clair sur le cliché et elle est matérialisée par la référence (F) alors que le reste de la structure de l'acier utilisé apparaît en foncé et est référencé par (G). L'agrandissement est G 200.

Les figures 4b et 4c sont les images binaires légèrement agrandies du cliché photographique de la figure 4a, le traitement d'image ayant été effectué au moyen d'un logiciel approprié tel que celui commercialisé sous la dénomination "VISILOG".

La ferrite libre (F) apparaissant en clair sur les figures 4b et 4c a pour taux par défaut de 6,7 % pour la figure 4b et par excès de 8,5 % pour la figure 4c.

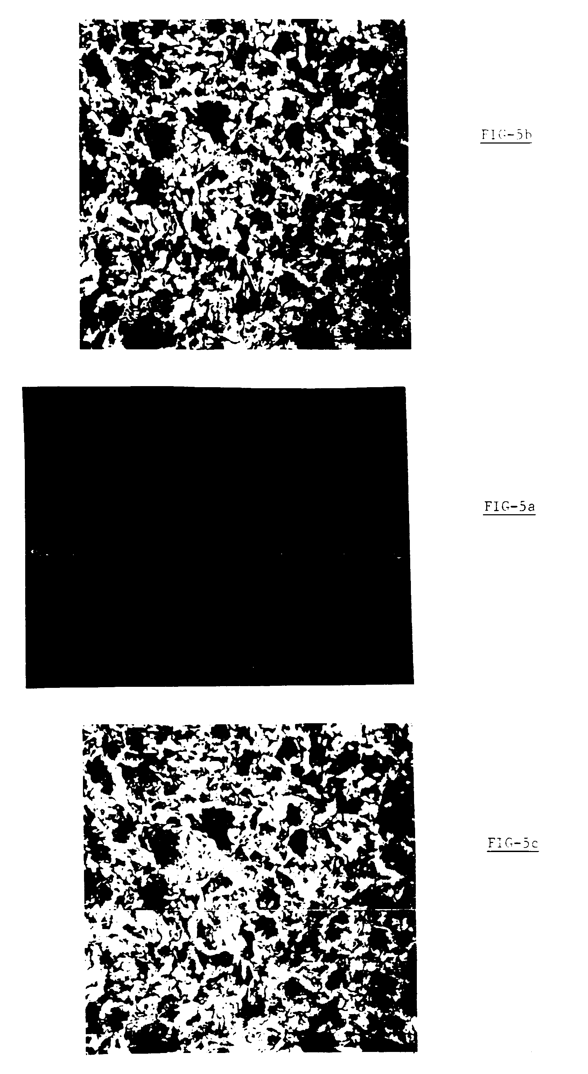

Lorsque le même fil échantillon n'est pas ou insuffisamment patenté, cela conduit à des images telles que celles représentées sur les figures 5a à 5c. La figure 5a est le cliché photographique (grossissement G 500) alors que les figures 5b et 5c sont les images binairisées obtenues à partir du cliché de la figure 5a. On constate que le taux de ferrite libre (F) est de 33,5 % par défaut et de 47 % par excès. Dans le cas de l'échantillon FM 35, le fil machine est patenté à une température inférieure à 950°C.

Il est ainsi démontré que l'opération de patentage, lorsqu'elle est correctement effectuée, influe considérablement sur le taux de ferrite libre de l'acier et a pour conséquence la compatibilité avec l'$H_2S$, après écrouissage et traitement thermique de restauration, comme on le verra plus loin.

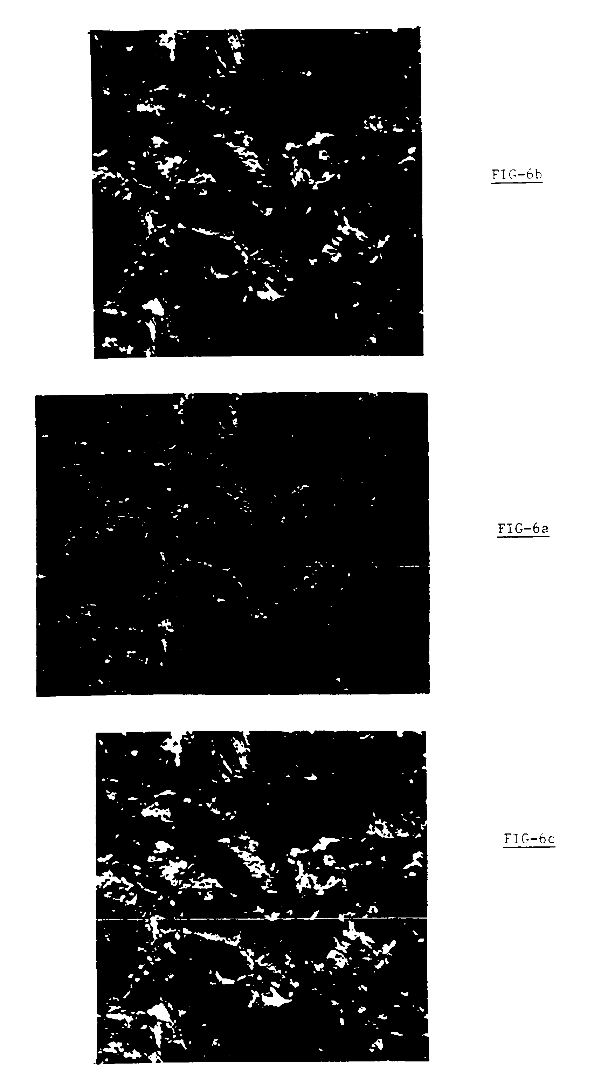

Une opération d'écrouissage à froid est ensuite réalisée sur les fils échantillons, suivie d'une opération de traitement thermique. Dans les différents cas étudiés, on a pu déterminer que les taux de ferrite libre caractérisant le fil formé dans son état définitif n'ont pas été affectés de façon significative. C'est ce qui est représenté sur les figures 6.

Les figures 6 sont relatives au fil échantillon patenté suivant l'invention des figures 4. Les images binairisés (figures 6b et 6c) du cliché photographique de la figure 6a (grossissement G 500), montrent que la teneur en ferrite libre est comprise entre 6 (figure 6b) et 9,3 % (figure 6c), avec un taux d'écrouissage de 60 % et une température de restauration de 450°C.

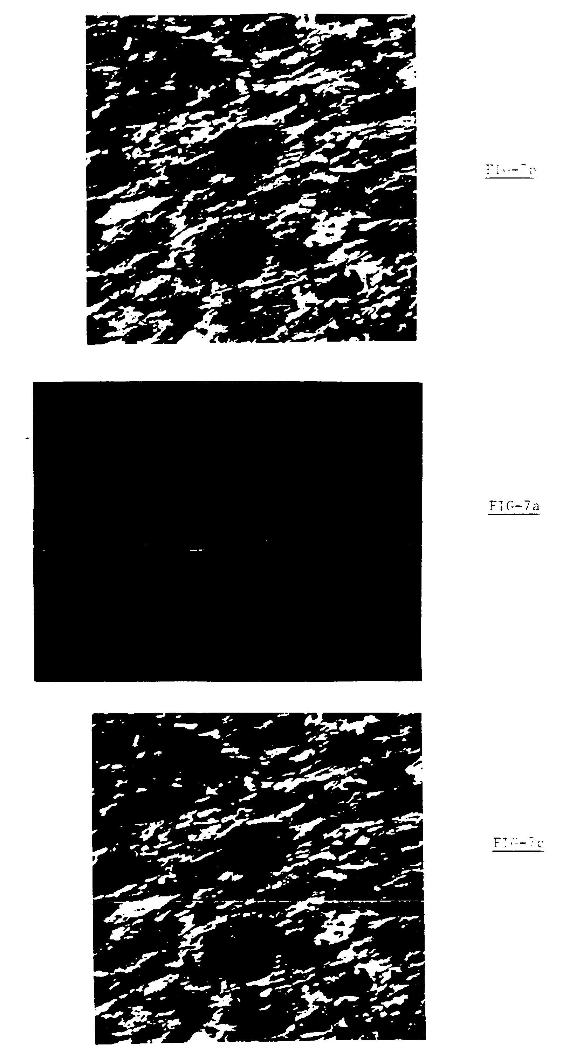

Les figures 7 sont relatives à un fil d'acier FM 45 (teneur en carbone 0,45 %), qui est insuffisamment patenté (température inférieure à 950°C), écroui à 60 % . Les figures 7b et 7c, binairisées à partir du cliché photographique de la figure 7a (grossissement 1000), montrent que la teneur en ferrite libre est comprise entre 16,3 et 23,4. Une comparaison avec un fil de même pourcentage en carbone et correctement patenté montrerait que la teneur en ferrite libre serait, comme pour les exemples concernant le FM 35 des figures 4 et 6, inférieure à 15 % .

La présente invention a mis en évidence, que pour les aciers à teneur en carbone comprise entre 0,25 % et 0,55 %, le patentage spécifique préconisé permet d'obtenir un fil d'acier présentant un faible taux de ferrite libre et que ce faible taux se retrouve après écrouissage et traitement thermique du fil formé, ledit fil présentant alors une bonne compatibilité à l'$H_2S$, comme on le verra plus loin.

Pour ces fils d'acier (0,25 < C <0,55 %) et patentés à haute température, de préférence supérieure à 1000°C, le taux d'écrouissage moyen de la section totale à froid doit être compris entre 20 et 80 % .

L'influence du patentage sur la teneur en ferrite libre est mise en évidence dans l'exemple ci-dessous.

Le fil machine qui est traité selon l'invention a pour composition :

| | |
|---|---|
| C = | 0,36 % |
| Mn = | 0,68 % |
| Si = | 0,21 % |
| Al = | 0,030 % |
| Ni = | 0,038 % |
| Cr = | 0,034 % |
| Cu = | 0,047 % |
| Mb = | 0,004 % |
| S = | 0,013 % |
| P = | 0,013 % |

Par le procédé de détermination indiqué à propos des figures 4 à 7, on a déterminé sur six échantillons de fil machine avant patentage (fil stelmor) et après patentage à une température supérieure à 1000°C, les taux de ferrite libre correspondants.

Sans patentage, les teneurs en ferrite libre sont comprises entre 35,9 % (valeurs minimales) et 46,8 % (valeurs maximales), alors qu'après patentage, les teneurs en ferrite libre déterminées sont comprises entre 1,89 % (valeurs minimales) et 4,61 % (valeurs maximales).

Pour les aciers à forte teneur en carbone supérieure à 0,55%, il est possible de ne pas réaliser le patentage ou d'en réaliser un mais dont la température est supérieure à la température d'austénitisation (point AC$_3$) propre à l'acier utilisé.

Pour ces fils d'aciers (C > 0,55 %), le taux d'écrouissage est supérieur à 5 % .

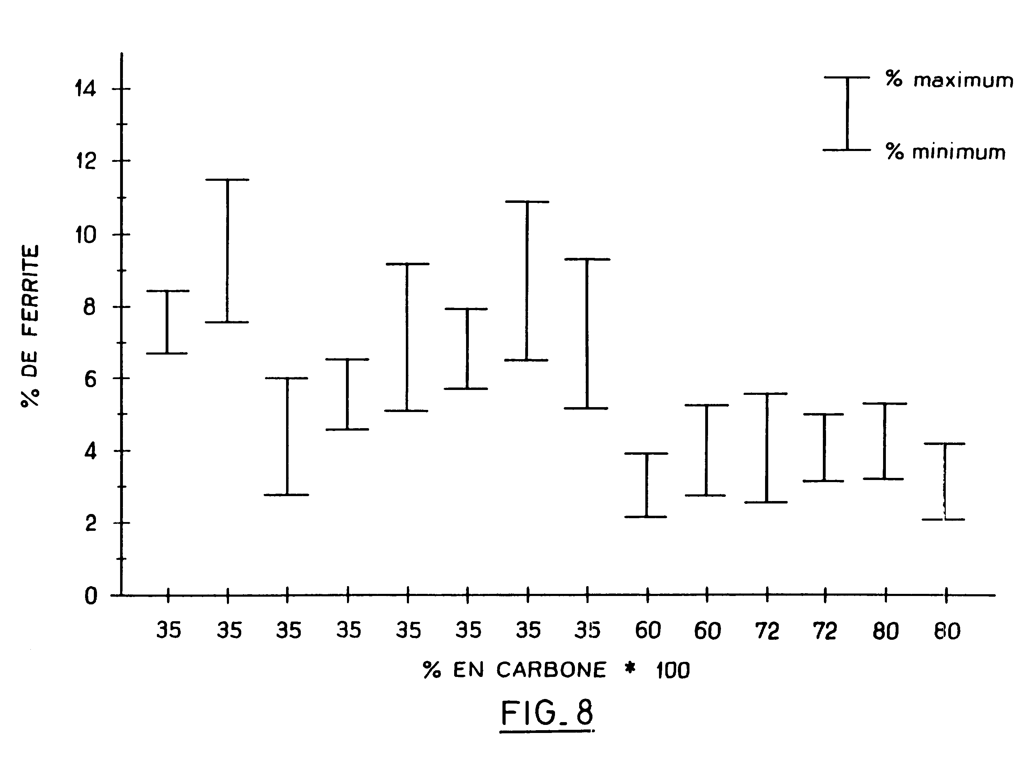

Les figures 8 à 11 montrent diverses valeurs du taux de ferrite libre qui ont été déterminées dans les conditions décrites ci-dessus sur des échantillons de fil machine et de fil formé prélevés sur des fabrications réalisées avec des aciers de teneur en carbone variant ce 0,35 % à 0,80 % . Il a ainsi été possible d'étudier la corrélation entre les valeurs de taux de ferrite libre et les résultats décrits ci-après des essais ce compatibilité avec l'H$_2$S des fils correspondants.

La figure 8 donne les valeurs de taux de ferrite libre déterminées pour divers échantillons de fil machine rond présentant des teneurs en carbone échelonnées de 0,35 % à 0,80 % .

La teneur moyenne du fil échantillon FM 35 correctement patenté est de 9 % et toutes les valeurs sont inférieures à 12 % . un remarque que lorsque la teneur en carbone est supérieure à 0,5 %, le taux de ferrite libre est faible bien qu'il n'y ait pas eu une opération de patentage.

Les échantillons sur la gauche de la figure 8 (teneur en C de 0,35 %) ont été patentés à haute température (supérieure à 1000°C) alors que les échantillons sur la droite de la figure (teneur en C entre 0,60 et 0,80 %) ne sont pas patentés (fil stelmor).

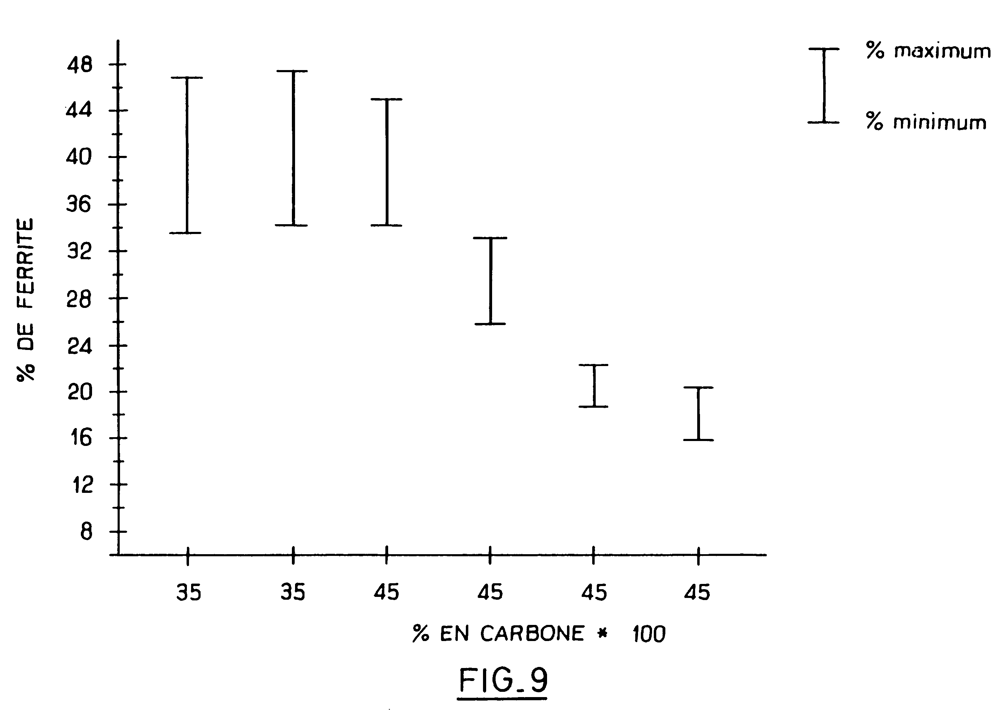

La figure 9 est relative à divers échantillons de fil machine rond dont les teneurs en carbone varient de 0,35 à 0,45 %, et qui ont subi un patentage à une température insuffisamment élevée (inférieure à 950°C).

Pour des teneurs en carbone inférieures à 0,5 %, le taux moyen de ferrite libre est d'environ 31 %, aucun échantillon ne présentant un taux inférieur à la limite de 15 % .

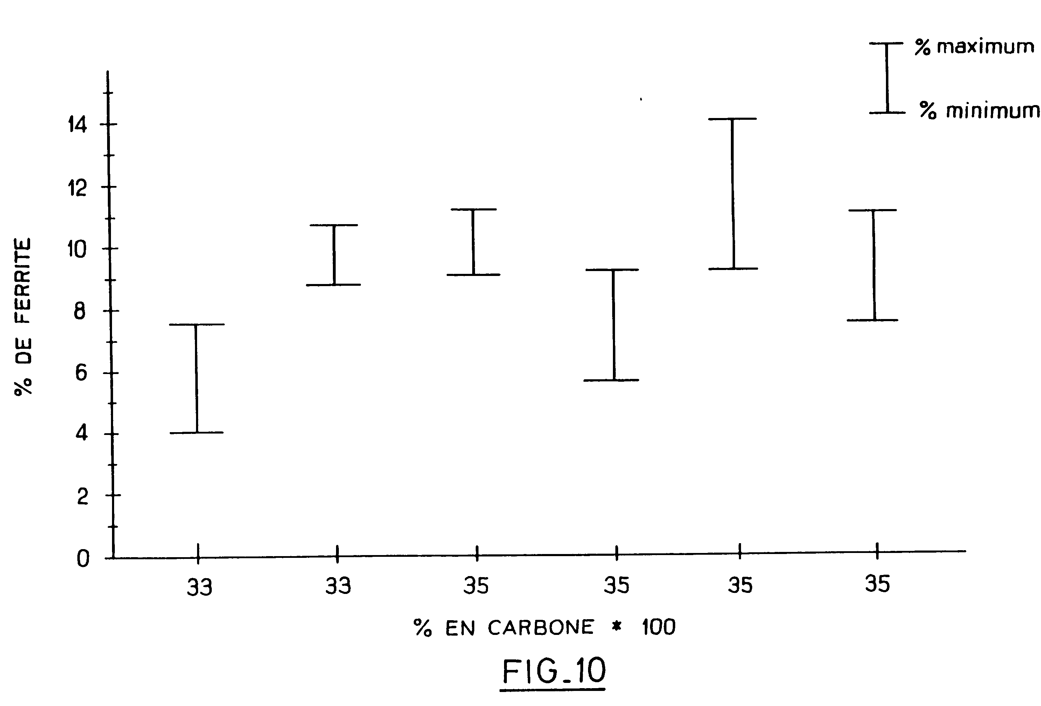

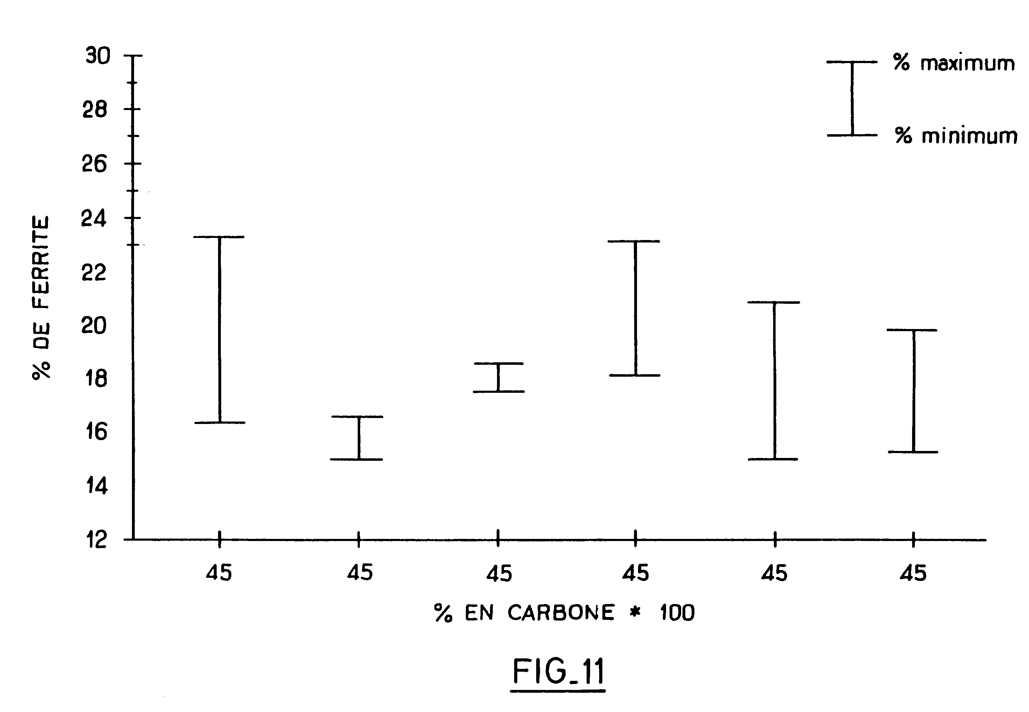

Les figures 10 et 11 relatives à des teneurs en carbone de 0,33 à 0,45 % permettent de constater, même après mise en forme et traitement thermique de restauration, la différence de taux en ferrite libre entre les fils échantillons correctement patentés (figure 10) et incorrectement patentés (figure 11) est relativement importante puisque dans le cas de la figure 10 le taux moyen de ferrite libre est de 7,2 % et dans tous les cas inférieur à 14 % alors que dans le cas de la figure 11, le taux moyen de ferrite libre est de 18,5 % et dans tous les cas supérieur à 15 % . Le taux d'écrouissage moyen de la section et la température de restauration pour ces fils sont respectivement de 60 % et 450°C.

Les aciers utilisés pour la mise en oeuvre de l'invention sont avantageusement des aciers couramment utilisés en tréfilerie, ayant de préférence une teneur en Mn de 0,6 à 1,4 % et par exemple une teneur en Si de l'ordre de 0,2 % à 0,4 % . Ces aciers sont sans élément d'alliage, et, dans un mode de réalisation avantageux, ne comportent pas d'additif du genre disperso0ïde (Ti, V, B, Nb, etc.).

Après écrouissage par tréfilage, laminage, martelage, ou tout autre mode de transformation à froid, pour obtenir des profils tels que ceux représentés sur la figure 2, les caractéristiques de résistance mécanique sont :

- limite élastique Re = 750 à 1150 MPa
- limite de rupture Rm = 850 à 1200 MPa
- dureté HRc = 24 à 38

Une courbe d'équivalence approximative entre dureté (HRc) et résistance de rupture est représentée sur la figure 3.

A partir du stade déformé à froid, il est connu d'améliorer des caractéristiques mécaniques par des traitements thermiques.

C'est ainsi que, par un traitement thermique classique autour de 570°C à 600°C pour des temps de 4 heures, les caractéristiques mécaniques d'un acier à 0,36 % Carbone écroui à 60 % sont ramenées à :

- Re 660-690 MPa
- Rm 770-800 MPa
- HRc < 22

L'acier devient alors conforme aux conditions spécifiées par la réglementation NACE 0175 pour l'utilisation en présence de H$_2$S, c'est-à-dire HRc < 22.

On voit d'après ce qui précède que, après un tel traitement thermique, la dureté, ainsi que la résistance à la rupture, ont été ramenées à environ 66 à 70 % de leurs valeurs après écrouissage, ce qui correspond à une restauration avancée accompagnée d'une recristallisation relativement importante.

Selon la présente invention, on a cherché à déterminer l'influence sur la tenue en milieu H$_2$S d'un traitement de restauration (recovery) effectué à des températures plus basses, pour n'avoir qu'une restauration partielle du métal avec peu ou sans recristallisation. Dans le cas de traitement par batch, il a été trouvé que la température du traitement thermique doit être comprise entre 400 et 600°C.

Le tableau 1 ci-dessous, donné à titre d'exemple représente l'évolution des caractéristiques mécaniques pour un acier d'analyse.

| C | Mn | Si |
|---|---|---|
| $\simeq 0,36$ | $\simeq 0,6$ | $\simeq 0,2$ |

après patentage du fil machine à une température suffisamment élevée (supérieure à 1000°C) et écrouissage de 60 %, en fonction de la température du traitement thermique final, pour des températures comprises entre 400 et 570°C. Le taux de ferrite libre est inférieur à 12 %.

Il faut noter que, sur ce tableau, l'essai N° 6 a été rappelé pour mémoire, à titre de comparaison, et qu'il correspond au traitement classique rappelé plus haut, lequel ramène la dureté à 22 HRc requise par la réglementation NACE.

TABLEAU I

| Essai | Etat | ReMPa | RmMPa | HRc |
|---|---|---|---|---|
| | écroui | 1 019 | 1 094 | 32 à 34 |
| 1 | 4 h à 400°C | 945 | 1 050 | 31 à 32 |
| 2 | 4 h à 430°C | 940 | 1 050 | 31 à 32 |
| 3 | 4 h à 450°C | 932 | 1 013 | 30 à 31 |
| 4 | 4 h à 500°C | 845 | 928 | 27 à 29 |
| 5 | 4 h à 550°C | 700 | 870 | 25 à 27 |
| 6 | 4 h à 570°C | 690 | 775 | < 22/ standard NACE |

On voit d'après ce tableau que pour les essais 1 à 5 la dureté après restauration a été ramenée entre 80 % et 95 % environ de la dureté après écrouissage, c'est-à-dire avec peu ou sans recristallisation.

Des échantillons de fil formé et soumis à un traitement thermique de restauration illustré sur les figures 10 et 11 ont été soumis au test SSCC NACE 01.77 avec des éprouvettes de dimensions de 155 mm de longueur, 9 mm de largeur et d'épaisseur 4 mm. Il a été ainsi trouvé que tous les fils de la figure 10 (avec des teneurs en carbone de 0,33 à 0,35 %, patentés à une température supérieure à 1000°C) qui présentaient un taux de ferrite libre inférieur à 15 % ont subi le test avec succès, avec des contraintes ayant atteint 500 MPa, alors que tous les échantillons FM 45 de la figure 11 présentant un taux de ferrite libre supérieur à 15 % ont rompu à 400 MPa.

Pour illustrer encore la corrélation qui a été découverte entre le taux de ferrite libre et la compatibilité à l'$H_2S$ d'un fil d'acier qui a été soumis après écrouissage à un traitement thermique de restauration selon l'invention, le tableau II ci-dessous résume les résultats des essais SSCC NACE 01.77 pratiqués sur une série d'échantillons de fils qui avaient été soumis, avant écrouissage et traitement de restauration, à un traitement préalable de patentage du fil machine réalisé à des températures variées de façon à obtenir des valeurs du taux de ferrite libre différentes, variant de 8 à 22 % .

**TABLEAU II**

**ACIER FM 35 ETAT PATENTE – ECROUI – RESTAURE**

Caractéristiques mécaniques Rm 1000 Re 850

| Patentage | Teneur en ferrite | Contrainte Tests NACE | Temps de rupture ou NR au bout de 30 j |
|---|---|---|---|
| Patenté à une température > 1000°C | 8 % | 400 MPa | NR |
| | | 500 MPa | NR |
| | | 600 MPa | NR |
| Patenté à une température > 1000°C | 12 % | 400 MPa | NR |
| | | 500 MPa | NR |
| | | 600 MPa | NR |
| Patenté à une température de 950°C | 17 % | 400 MPa | NR |
| | | 500 MPa | 23 j |
| | | 600 MPa | 6 j |
| Patenté à une température de 900°C | 22 % | 400 MPa | 19 j |
| | | 500 MPa | 7 j |

On constate que pour l'échantillon analysé FM 35, il a satisfait aux essais NACE 01-77, en milieu $H_2S$, en étant soumis à des contraintes qui varient entre 45 et 70 % de la limite d'élasticité.

Les fils d'acier à teneur en carbone comprise entre 0,55 et 0,8, lesdits aciers présentent peu de ferrite libre, et obtenus à partir de fils machine produits par un procédé du type STELMOR et non soumis à un patentage avant écrouissage, ont passé avec succès les essais du test SSCC de la norme NACE 01-77.

En outre, d'autres essais réalisés conformément à la norme NACE TM 02 84 87 ont permis de trouver que les fils d'acier obtenus selon la présente invention présentent une bonne résistance à la fragilisation par l'hydrogène (HIC). La procédure des tests a consisté à exposer sans tension, dans une solution d'eau de mer saturée $H_2S$, à température et pression ambiantes, à un pH compris entre 4,8 et 5,4 et après 92 heures d'essai, à évaluer les échantillons après avoir sectionné les échantillons en quatre et examiné les faces sectionnées pour déterminer la présence éventuelle de fissures.

Les résultats ci-dessous concernent un fil d'acier FM 35 et les échantillons sont de longueur 100 mm, de largeur 15,3 mm et d'épaisseur 4 mm.

Dans le tableau des résultats, on a rapporté la valeur CSR : "Crack sensitivity Ratio" tel qu'il est défini dans la norme :

**Acier FM 35 état patenté - Ecroui restauré** Caractéristiques mécaniques Rm = 1 000 MPa Re = 850 MPa Test selon la norme NACE TM 02 84

| Patentage | Teneur en ferrite | CSR |
|---|---|---|
| Patenté à une température > 1000°C | 8 | 0 |
| Patenté à une température > 1000°C | 12 | 0 |
| Patenté à une température de 950°C | 17 | 2 |
| Patenté à une température de 900°C | 22 | 5 |

Les aciers conformes à l'invention ne présentent aucune trace de fissuration après essai (CSR = 3). Sur certaines éprouvettes qui n'ont pas été sectionnées, on a procédé à la détermination des caractéristiques mécaniques après essai selon la norme TM 02 84.

Sur les éprouvettes à faible teneur en ferrite 8 et 12 %, on n'a constaté aucune variation de la résistance à la rupture (Rm), de la limite élastique (Re) et de l'allongement (A %), ce qui confirme que l'acier n'a pas été sensibilisé par l'hydrogène.

L'ensemble de ces résultats montre que, grâce au traitement de restauration suivant l'invention, dans le cas d'un acier au carbone avec des teneurs entre 0,25 et 0,80 %, sans aucun additif type dispersoïde (Ti, V, B, Nb, etc.), cet acier convenablement traité après écrouissage à froid, se caractérise par le fait que tout en ayant des caractéristiques mécaniques élevées Rm supérieures à 800 MPa il passe avec succès le test NACE 0177 qui sert à déterminer la compatiblité d'utilisation en présence de $H_2S$ à des contraintes de l'ordre de 45 % et pouvant atteindre 70 % de la limite d'élasticité, ainsi que le test NACE TM 02 84 87, à condition que le taux de ferrite libre soit suffisamment faible, inférieur à 15 % et de préférence à 12 % .

La figure 12 représente des courbes représentatives de deux échantillons de fils d'acier FM 35 et FM 56, sur lesquelles les limites de rupture (Rm) et élastiques (Re) sont en ordonnées et en abscisses la température du traitement thermique.

Pour le fil FM 35, après patentage à une température supérieure à 1000°C et écrouissage de 60 %, les valeurs de Re et Rm, avant tout traitement thermique, sont de 975 et 1105 MPa respectivement.

Pour le fil FM 56, après patentage à une température supérieure à 950°C et écrouissage de 60 %, les valeurs de Re et Rm, avant tout traitement thermique, sont de 1180 et 1370 MPa respectivement.

Pour mémoire, on rappelle que le standard NACE 01.75 considère comme compatible avec $H_2S$ les aciers au carbone ayant une HRc inférieure ou égale à 22 qui correspond à une Rm maximum d'environ 780 à 800 MPa.

On remarque sur les courbes de la figure 12 que, pour des températures de traitement thermique relativement basses, de l'ordre de 300 à 400°C dans le cas de l'acier particulier concerné ici, la limite élastique et la résistance à la rupture sont légèrement augmentées par rapport aux valeurs caractérisant l'acier écroui avant traitement thermique, à la température ambiante, et qu'au-delà d'une certaine température (environ 400°), la limite élastique et la résistance à la rupture diminuent progressivement en fonction de la température du traitement thermique, la zone de décroissance des courbes étant caractéristique du traitement de restauration, et étant prolongée au-delà d'une température plus élevée (environ 600°), par une zone de pente plus faible qui correspond à un traitement de recuit déterminant une recristallisation très importante ou totale. Il a été trouvé, selon l'invention, que la température minimale à laquelle doit être effectué le traitement thermique de restauration sur le fil écroui pour le rendre compatible à l'$H_2S$ correspond à la température à laquelle la limite élastique du fil traité est ramenée à une valeur ne dépassant pas la limite élastique du fil écroui à froid. Dans le cas des fils d'acier concernés par la figure 12, le traitement de restauration doit être effectué à une température supérieure à environ 430°, pour laquelle les limites élastiques des fils traités thermiquement correspondent respectivement aux valeurs de 975 MPa pour le FM 35 et 1180 Ma pour le FM 56, valeurs qui caractérisent ces fils dans leur état écroui.

En résumé, on obtient grâce à la présente invention, des fils dont les caractéristiques mécaniques sont comprises entre :

- Re 750 à 1 150 MPa
- Rm 850 à 1 200 MPa
- HRc 22,5 à 37

Les fils ainsi élaborés se caractérisent par leur bon comportement à la corrosion sous contrainte en présence de

$H_2S$, vérifié par des tests conduits conformément au standard NACE 0177 sous des contraintes pouvant atteindre 70 % de la limite d'élasticité.

L'utilisation des aciers 0,25-0,80 % environ pour la fabrication de fils d'armure selon le procédé de l'invention, ces fils devant constituer des nappes d'armures pour conduites flexibles, permet un gain pour l'acier écroui restauré, de 25 %, soit en poids d'acier, soit en pression de service, par rapport aux aciers utilisés jusqu'à présent.

En effet, pour comparer par exemple, l'échantillon n°3 avec l'échantillon n°6 du tableau I (acier du type utilisé actuellement avec dureté < 22 HRc), et en adoptant dans les deux cas le même coefficient de sécurité de 2,25 (valeur classique) entre contrainte de service et limite de rupture, les contraintes de service admissibles sont dans le même rapport que les limites de rupture, qui sont respectivement de l'ordre de 1000 (fil n° 3) et 800 MPa (fil n° 6), soit un rapport de 1000/800 = 1,25.

Les valeurs correspondantes de contraintes maximales dans les conditions de service, qui sont ainsi de

$$\frac{1000}{2,25} = 444$$

et

$$\frac{800}{2,25} = 355$$

sont effectivement acceptables par rapport aux deux autres critères de dimensionnement. On trouve :

- contrainte aux essais hydrostatiques sur la conduite flexible (à 1,5 x pression de service) inférieure à la limite élastique :

  . soit 1,5 x 444 = 666 < Re = 932 MPa (fil n° 3)
  . soit 1,5 x 355 = 533 < Re = 690 MPa (fil n° 6)

- contrainte de service inférieure à la contrainte réalisée aux essais NACE sans rupture.

L'opération de mise en forme du fil avec écrouissage peut être réalisée par tout procédé connu de tréfilage, laminage, étirage ou martelage. L'opération d'écrouissage peut être réalisée en plusieurs passes; elle peut également être précédée par une opération de mise en forme à chaud, sans écrouissage, qui permet, par exemple, de réaliser un fil préformé intermédiaire à partir d'un fil machine rond. De même, on peut utiliser un fil machine présentant une section non circulaire choisie en fonction de la section finale du fil. Dans tous les cas, le taux d'écrouissage tel qu'il est pris en considération au terme de la présente invention est déterminé à partir des sections respectives, d'une part, du fil après transformation à chaud et avant transformation induisant un effet d'écrouissage et d'autre part, du fil transformé final.

Dans un mode particulier de réalisation, l'opération de traitement thermique de restauration peut être combinée avec l'opération de mise en forme qui comprend une phase finale qui est effectuée sur un fil chauffé au préalable, ladite phase finale pouvant être un tréfilage, laminage ou étirage.

Des résultats intéressants sont obtenus en utilisant des aciers calmés soit au silicium, soit à l'aluminium, soit encore au silico-calcium, ou une combinaison de ces éléments, pour faciliter l'écrouissage et améliorer la qualité du produit final.

Lorsqu'on utilise des aciers comportant un additif dispersoïde (vanadium, niobium, titane, bore, etc...) et traités selon le procédé de l'invention, on obtient des valeurs de Re et Rm plus élevées, par exemple une Rm comprise entre 850 et 1400 MPa.

Les flexibles réalisés au moins partiellement avec des fils d'acier obtenus selon la présente invention peuvent présenter des diamètres intérieurs variant par exemple entre 25 mm et 500 mm, les pressions maximales de service pouvant atteindre jusqu'à 1000 bars. Les éléments des flexibles réalisés avec les fils d'acier de la présente invention peuvent notamment être une armure, une voûte, une carcasse ou un renfort métallique.

## Revendications

1. Procédé d'élaboration de fils d'acier résistant à la corrosion en présence d'$H_2S$, du type consistant à utiliser un fil initial en acier au carbone ayant une teneur en carbone comprise entre 0,25 et 0,8, à faire subir audit fil initial qui est continu, de grande longueur et de section constante au moins une opération de mise en forme provoquant un écrouissage dont le taux moyen est supérieur à au moins 5 %, et à traiter thermiquement ledit fil mis en forme, caractérisé en ce qu'on utilise pour le soumettre à ladite opération de mise en forme un fil présentant une structure perlite-ferrite, en ce que pour un taux d'écrouissage donné du fil initial, on réalise un traitement thermique dans des conditions de durée et de température telles que le fil d'acier obtenu, après traitement, présente une résistance mécanique à la rupture ($R_m$) supérieure à 850 MPa et une teneur en ferrite libre inférieure à 15 % et en ce que le fil d'acier final présente une limite d'élasticité ($R_e$) inférieure à celle qu'il avait à l'état écroui à froid.

2. Procédé selon la revendication 1, caractérisé en ce que le taux de ferrite libre est inférieur à 12 %.

3. Procédé selon la revendication 1, caractérisé en ce qu'une opération de patentage est effectuée préalablement à l'écrouissage.

4. Procédé selon la revendication 3, caractérisé en ce que le fil continu présente une teneur en carbone inférieure à 0,55 % et en ce que le patentage est effectué à une température supérieure à 950°C.

5. Procédé selon la revendication 4, caractérisé en ce que le fil continu présente une teneur en carbone supérieure à 0,55 % et en ce que le patentage est effectué à une température supérieure à la température d'austénitisation ($AC_3$).

6. Procédé selon l'une des revendications 1 à 5, caractérisé en ce que le traitement thermique est tel qu'il abaisse au moins de 5 % la résistance à la rupture du fil écroui à froid.

7. Procédé selon l'une des revendications précédentes, caractérisé en ce que le fil d'acier comporte au moins un additif du type dispersoïde, tel que Ti, V, B, Nb.

8. Procédé selon l'une des revendications précédentes, caractérisé en ce que le traitement thermique après écrouissage à froid, est un traitement par lot, la durée étant de plusieurs heures, de préférence 3 à 4 heures, et une température comprise entre 400 et 600°C.

9. Procédé selon l'une des revendications 1 à 8, caractérisé en ce que le traitement thermique, après écrouissage à froid, est un traitement thermique par défilement dans un four et dans lequel les valeurs de l'intensité du chauffage, la vitesse de défilement et la longueur du four sont choisies de telle sorte que, d'une part, la résistance à la rupture soit abaissée d'au moins 5 % et, d'autre part, que la température du fil dans le four soit inférieure à la température correspondant au début de la température d'austénitisation.

10. Procédé selon la revendication 1, caractérisé en ce que l'opération de mise en forme est effectuée de manière à obtenir un préformé.

11. Procédé selon la revendication 10, caractérisé en ce que l'opération de mise en forme est effectuée à chaud.

12. Procédé selon la revendication 11, caractérisé en ce que l'opération de mise en forme à chaud est suivie d'un patentage.

13. Procédé selon l'une des revendications 10 ou 11, caractérisé en ce que l'opération de mise en forme provoque un écrouissage.

14. Procédé selon la revendication 1, caractérisé en ce que l'opération de mise en forme comprend une phase finale qui est effectuée sur un fil chauffé au préalable de manière à provoquer un effet de restauration en combinaison avec ladite mise en forme.

15. Procédé selon la revendication 1, du type dans lequel on utilise un fil continu de grande longueur et de section constante et comprenant une teneur en carbone inférieure à 0,55 %, caractérisé en ce qu'on utilise un fil initial présentant une structure perlite-ferrite et en ce qu'il consiste à effectuer un patentage à une température supérieure à 950°C de manière à obtenir une teneur en ferrite libre inférieure à 15 % et de préférence inférieure à 12 %, à soumettre ensuite le fil patenté à un écrouissage dont le taux moyen est au moins supérieur à 5 %, à soumettre ensuite ledit fil écroui présentant une première limite d'élasticité à un traitement thermique de restauration de façon que le fil d'acier ainsi obtenu présente, d'une part, une deuxième limite d'élasticité inférieure à ladite première limite d'élasticité et, d'autre part, une résistance à la rupture diminuée d'au moins 5 %.

16. Procédé selon la revendication 1, du type dans lequel on utilise un fil continu de grande longueur, de section constante et comprenant une teneur en carbone supérieure à 0,55 %, caractérisé en ce qu'il présente une structure perlite-ferrite et en ce qu'il consiste à effectuer un écrouissage dont le taux moyen est compris entre 5 et 80 % puis à soumettre ledit fil écroui présentant une première limite d'élasticité à un traitement thermique de restauration dont les conditions de température et de durée sont telles que le fil d'acier ainsi traité présente, d'une part, une deuxième limite d'élasticité inférieure à ladite première valeur d'élasticité et, d'autre part, une résistance à la rupture diminuée d'au moins 5 %.

17. Procédé selon la revendication 16, caractérisé en ce que préalablement à l'écrouissage, on effectue un patentage à une température supérieure à la température d'austénitisation de manière à obtenir un fil homogène facilitant la transformation à froid.

18. Procédé selon l'une des revendications 1 à 17, caractérisé en ce que le fil continu est un fil d'acier calmé au silicium.

19. Procédé selon la revendication 18, caractérisé en ce que le fil d'acier calmé au silicium est également calmé à l'aluminium.

20. Procédé selon l'une des revendications 1 à 17, caractérisé en ce que le fil continu est un fil d'acier calmé au silico-calcium.

21. Fil en acier au carbone dont le teneur en carbone est comprise entre 0,25 et 0,80 %, et sans dispersoïde, caractérisé en ce qu'il présente une structure perlite-ferrite dont la teneur en ferrite libre est inférieure à 15 % et une résistance mécanique à la rupture (Rm) comprise entre 850 et 1200 MPa, ledit fil étant apte à constituer un fil d'armature de flexible résistant à la corrosion en présence d'$H_2S$.

22. Fil d'acier au carbone dont la teneur en carbone est comprise entre 0,25 et 0,80 % avec au moins un dispersoïde, caractérisé en ce qu'il présente une structure en perlite-ferrite à teneur en ferrite libre inférieure à 15 % et une résistance mécanique à la rupture (Rm) comprise entre 850 et 1400 MPa, ledit fil étant apte à constituer un fil d'armature de flexible résistant à la corrosion en présence d'$H_2S$.

23. Flexible comportant au moins une armature réalisée à partir d'au moins une nappe de fils d'acier selon l'une des revendications 21 ou 22.

**Patentansprüche**

1. Verfahren zur Herstellung von Stahldrähten, die in Anwesenheit von $H_2S$ korrosionsbeständig sind, wobei ein Ausgangsstahldraht mit Kohlenstoff verwendet wird, dessen Kohlenstoffgehalt zwischen 0,25 und 0,8 liegt, wobei der Ausgangsdraht, der fortlaufend, von großer Länge und konstantem Querschnitt ist, mindestens einem Formgebungsvorgang unterworfen wird, der eine Kaltverformung hervorruft, deren mittlerer Verformungsgrad größer als wenigstens 5 % ist, und wobei der geformte-Draht thermisch behandelt wird,
**dadurch gekennzeichnet, daß** zum Unterwerfen unter den Formgebungsvorgang ein Draht mit einer Perlit-Ferrit-Struktur verwendet wird, daß, bei einem gegebenen Kaltverformungsgrad des Ausgangsdrahtes, eine thermische Behandlung durchgeführt wird, bei der die Bedingungen der Dauer und Temperatur so sind, daß der erhaltene Stahldraht nach der Behandlung eine mechanische Bruchfestigkeit ($R_m$) größer als 850 MPa, einen Gehalt an freiem Ferrit kleiner als 15 % und der fertige Stahldraht eine geringere Elastizitätsgrenze ($R_e$) aufweist, als diejenige, die er im kaltverformten Zustand hatte.

2. Verfahren nach Anspruch 1,
**dadurch gekennzeichnet,** daß der Gehalt an freiem Ferrit niedriger als 12 % ist.

3. Verfahren nach Anspruch 1,
**dadurch gekennzeichnet, daß** ein Patentiervorgang vor der Kaltverformung durchgeführt wird.

4. Verfahren nach Anspruch 3,
**dadurch gekennzeichnet, daß** der fortlaufende Draht einen Kohlenstoffgehalt kleiner als 0,55 % aufweist und daß das Patentieren bei einer Temperatur größer als 950 °C durchgeführt wird.

5. Verfahren nach Anspruch 4,
**dadurch gekennzeichnet, daß** der fortlaufende Draht einen Kohlenstoffgehalt größer als 0,55 % aufweist und daß das Patentieren bei einer Temperatur größer als die Temperatur der Austenitisierung ($AC_3$) erfolgt.

6. Verfahren nach einem der Ansprüche 1 bis 5,
   **dadurch gekennzeichnet, daß** die thermische Behandlung derart ist, daß die Bruchfestigkeit des kaltverformten Drahtes um wenigstens 5 % gesenkt wird.

7. Verfahren nach einem der vorstehenden Ansprüche,
   **dadurch gekennzeichnet, daß** der Stahldraht wenigstens ein dispersives Additiv enthält, wie z.B. Ti, V, B, Nb.

8. Verfahren nach einem der vorstehenden Ansprüche,
   **dadurch gekennzeichnet**, **daß** die thermische Behandlung nach der Kaltverformung eine absatzweise Behandlung ist, wobei die Dauer mehrere, vorzugsweise 3 bis 4 Stunden beträgt und die Temperatur zwischen 400 und 600 °C liegt.

9. Verfahren nach einem der Ansprüche 1 bis 8,
   **dadurch gekennzeichnet, daß** die thermische Behandlung nach der Kaltverformung dergestalt ist, daß in einen Ofen abgespult wird und die Werte der Heizintensität, der Abspulgeschwindigkeit und der Ofenlänge so gewählt werden, daß einerseits die Bruchfestigkeit wenigstens um 5 % gesenkt wird, und andererseits die Temperatur des Drahtes in dem Ofen geringer ist als die Temperatur, die dem Anfang der Austenitisierungstemperatur entspricht.

10. Verfahren nach Anspruch 1,
    **dadurch gekennzeichnet, daß** der Formgebungsvorgang so durchgeführt wird, daß eine Vorform erhalten wird.

11. Verfahren nach Anspruch 10,
    **dadurch gekennzeichnet, daß** der Formgebungsvorgang bei Wärme durchgeführt wird.

12. Verfahren nach Anspruch 11
    **dadurch gekennzeichnet**, **daß** dem Warmverformungsvorgang ein Patentieren folgt.

13. Verfahren nach einem der Ansprüche 10 oder 11,
    **dadurch gekennzeichnet, daß** der Formgebungsvorgang eine Kaltverformung hervorruft.

14. Verfahren nach Anspruch 1,
    **dadurch gekennzeichnet, daß** der Formgebungsvorgang einen abschließenden Schritt enthält, der an einem vorher erwärmten Draht so durchgeführt wird, daß ein Wiederherstellungseffekt in Verbindung mit der Formgebung hervorgerufen wird.

15. Verfahren nach Anspruch 1, wobei ein fortlaufender Draht großer Länge, konstanten Querschnitts und mit einem Kohlenstoffgehalt kleiner als 0,55 % verwendet wird,
    **dadurch gekennzeichnet, daß** ein Ausgangsdraht mit einer Perlit-Ferrit-Struktur verwendet wird, und daß das Verfahren umfaßt: Durchführen eines Patentierens bei einer Temperatur größer als 950 °C, derart, daß ein Gehalt an freiem Ferrit kleiner als 15 % und vorzugsweise kleiner als 12 % erreicht wird, anschließendes Unterwerfen des patentierten Drahtes einer Kaltverformung mit einem mittleren Verformungsgrad größer als 5 % und anschließendes Unterwerfen des kaltverformten Drahtes, der eine erste Elastizitätsgrenze hat, einer thermischen Wiederherstellungsbehandlung, so daß der derart erhaltene Stahldraht einerseits eine zweite Elastizitätsgrenze unterhalb der ersten Elastizitätsgrenze und andererseits eine um wenigstens 5 % reduzierte Bruchfestigkeit aufweist.

16. Verfahren nach Anspruch 1, wobei ein fortlaufender Draht großer Länge, konstanten Querschnitts und mit einem Kohlenstoffgehalt größer als 0,55 % verwendet wird,
    **dadurch gekennzeichnet, daß** dieser eine Perlit-Ferrit-Struktur aufweist und daß das Verfahren umfaßt: Durchführen einer Kaltverformung, deren mittlerer Verformungsgrad zwischen 5 und 80 % liegt, und anschließendes Unterwerfen des kaltgeformten Drahtes, der eine erste Elastizitätsgrenze hat, einer thermischen Wiederherstellungsbehandlung, deren Bedingungen der Temperatur und Dauer so sind, daß der derart behandelte Stahldraht einerseits eine zweite Elastizitätsgrenze unterhalb des ersten Elastizitätswerts und andererseits eine Bruchfestigkeit hat, die um wenigstens 5 % reduziert ist.

17. Verfahren nach Anspruch 16,
    **dadurch gekennzeichnet, daß** vor der Kaltverformung ein Patentieren bei einer Temperatur größer als die Austenitisierungstemperatur so durchgeführt wird, daß ein homogener Draht hergestellt wird, welcher die Kaltumformung erleichtert.

**18.** Verfahren nach einem der Ansprüche 1 bis 17,
**dadurch gekennzeichnet, daß** der fortlaufende Draht ein silizium-beruhigter Stahldraht ist.

**19.** Verfahren nach Anspruch 18,
**dadurch gekennzeichnet, daß** der silizium-beruhigte Stahldraht gleichfalls aluminium-beruhigt ist.

**20.** Verfahren nach einem der Ansprüche 1 bis 17,
**dadurch gekennzeichnet, daß** der fortlaufende Draht ein kalzium-silizium-beruhigter Stahldraht ist.

**21.** Kohlenstoffstahldraht mit einem Kohlenstoffgehalt zwischen 0,25 und 0,80 %, und ohne Dispersoid,
**dadurch gekennzeichnet, daß** er eine Perlit-Ferrit-Struktur mit einem Gehalt an freiem Ferrit kleiner als 15 % und eine mechanische Bruchfestigkeit ($R_m$) zwischen 850 und 1200 MPa aufweist, wobei der Draht geeignet ist, als ein beweglicher, in Anwesenheit von $H_2S$ korrosionsbeständiger Einlagedraht eingesetzt zu werden.

**22.** Kohlenstoffstahldraht mit einem Kohlenstoffgehalt zwischen 0,25 und 0,80 % und mindestens einem Dispersoid,
**dadurch gekennzeichnet, daß** er eine Perlit-Ferrit-Struktur mit einem Gehalt an freiem Ferrit kleiner als 15 % und eine mechanische Bruchfestigkeit ($R_m$) zwischen 850 und 1400 MPa aufweist, wobei der Draht geeignet ist, als ein beweglicher, in Anwesenheit von $H_2S$ korrosionsbeständiger Einlagedraht eingesetzt zu werden.

**23.** Biegsames Element, welches mindestens eine Einlage enthält, die aus wenigstens einer Stahldrahtschicht entsprechend den Ansprüchen 21 oder 22 hergestellt ist.


**Claims**

**1.** A method of producing steel wires which are resistant to corrosion in the presence of $H_2S$, of the type subjecting an initial wire of carbon steel having a carbon content of between 0.25 and 0.8, wich is continuous, of long length and of constant cross section, to at least one shaping operation causing a strain-hardening the average percentage of which is greater than at least 5 %, and heat-treating said shaped wire, characterized by the fact that, for a given strain-hardening percentage of the initial wire, a heat treatment is carried out under conditions of time and temperature such that the steel wire obtained after treatment has a mechanical rupture strength (Rm) greater than 850 MPa and a structure containing little free ferrite.

**2.** A method according to claim 1, characterized by the fact that the free ferrite content is less than 15 %, and preferably less than 12 %.

**3.** A method according to claim 1, characterized by the fact that a patenting operation is carried out prior to the strain-hardening.

**4.** A method according to claim 3, characterized by the fact that the continuous wire has a carbon content of less than 0.55 %, and by the fact that the patenting is effected at a temperature above 950°C.

**5.** A method according to claim 4, wherein the continuous wire has a carbon content higher than 0.55 % and wherein the patenting operation is carried out at a temperature above the austenitization temperature ($AC_3$).

**6.** A method according to any of claims 1 to 5, characterized by the fact that the heat treatment is such that it lowers the resistance to rupture of the cold-worked wire by at least 5 %.

**7.** A method according to any of the preceding claims, characterized by the fact that the steel wire contains at least one additive of the dispersoid type, such as Ti, V, B, Nb.

**8.** A method according to any of the preceding claims, characterized by the fact that the heat treatment after cold-working is a batch treatment, the duration thereof being several hours, preferably 3 to 4 hours, and a temperature of between 400 and 600°C.

**9.** A method according to any of claims 1 to 8, characterized by the fact that the heat treatment after cold-working is a heat treatment by passage in a furnace and in which the values of the intensity of the heating, the speed passage and the length of the furnace are so selected that, on the one hand, the rupture strength is lowered by at least 5 % and, on the other hand, the temperature of the wire in the furnace is less than the temperature corresponding to the start of the austenitization temperature.

10. A method according to claim 1, characterized by the fact that the shaping operation is carried out in such a manner as to obtain a pre-form.

11. A method according to claim 10, characterized by the fact that the shaping operation is carried out at elevated temperature.

12. A method according to claim 11, characterized by the fact that the hot shaping operation is followed by a patenting.

13. A method according to either of claims 10 and 11, characterized by the fact that the shaping operation causes a strain-hardening.

14. A method according to claim 1, characterized by the fact that the shaping operation comprises a final phase which is carried out on a previously heated wire so as to produce a recovery effect in combination with said shaping.

15. A method according to claim 1 of the type in which the initial wire is a continuous wire of long length and constant cross section having a carbon content of less than 0.60 %, characterized by the fact that it consists in effecting a patenting at high temperature so as to obtain a free ferrite of less than 15 % and preferably less than 12 %, then subjecting the patented wire to a strain-hardening the average rate of which is at least greater than 5 %, then subjecting said strain-hardened wire having a first elastic limit to a recovery heat treatment so that the steel wire thus obtained has, on the one hand, a second elastic limit lower than said first elastic limit and, on the other hand, a rupture strength which is reduced by at least 5 %.

16. A method according to claim 1 of the type in which a continuous wire of long length and constant cross section and comprising a carbon content of more than 0.50 % is used, characterized by the fact that it consists in effecting a strain-hardening the average rate of which is between 5 and 80 %, and then subjecting said strain-hardened wire having a first elastic limit to a recovery heat treatment the temperature and time conditions of which are such that the steel wire thus treated has, on the one hand, a second elastic limit which is lower than said first elasticity value and, on the other hand, a rupture strength which is reduced by at least 5 %.

17. A method according to claim 16, characterized by the fact that, prior to the strain-hardening, a patenting is effected at a temperature above the austenitization temperature so as to obtain a homogeneous wire which facilitates the cold transformation.

18. A method according to any of claims 1 to 17, characterized by the fact that the continuous wire is a silicon-killed steel wire.

19. A method according to claim 18, characterized by the fact that the silicon-killed steel wire is also aluminum-killed.

20. A method according to any of claims 1 to 17, characterized by the fact that the continuous wire is silico-calcium-killed steel wire.

21. A carbon steel wire resistant to corrosion in the presence of $H_2S$ the carbon content of which is between 0.25 and 80 %, and without dispersoid, characterized by the fact that it has a free ferrite content of less than 15 % and a mechanical rupture strength (Rm) of between 850 and 1200 MPa said wire being adapted to be used as a reinforcement wire for a flexible duct resistant to $H_2S$.

22. A carbon steel wire resistant to corrosion in the presence of $H_2S$, the carbon content of which is between 0.25 and 0.80 % with at least one dispersoid, characterized by the fact it comprises a free ferrite content of less than 15 %, and the rupture limit (Rm) of which is between 850 and 1400 MPa, said wire being adapted to be used as a reinforcement wire for a flexible duct resistant to $H_2S$.

23. A flexible duct comprising at least one reinforcement made from at least one ply of steel wires according to either of claims 21 and 22.

## FIG_1

## FIG_3

## FIG_2

## FIG_12

FIG-4b

FIG-4a

FIG-4c

FIG-5b

FIG-5a

FIG-5c

FIG-6b

FIG-6a

FIG-6c

FIG-7b

FIG-7a

FIG-7c

FIG. 8

EP 0 478 771 B1

FIG.9

EP 0 478 771 B1

FIG.10

EP 0 478 771 B1

FIG.11

EP 0 478 771 B1